# EUROPÄISCHE PATENTANMELDUNG

(11) **EP 1 267 521 A2**
(43) Veröffentlichungstag der Anmeldung: **18.12.2002**
(21) Anmeldenummer: 02013070.4
(22) Anmeldetag: 13.06.2002
(51) Int. Cl.: H04L 12/24

(54) **Verfahren zur Steuerung von in einem ringförmigen Netzwerk miteinander vernetzten Einheiten**

(30) Priorität: 13.06.2001 DE 10128542
(71) Anmelder: Harman/Becker Automotive Systems (Becker Division) GmbH, 76307 Karlsbad (DE)
(72) Erfinder: Gölz, Hans-Peter, 69250 Schönau (DE); Tran, Tien Manh, 66482 Zweibrücken (DE); Beckers, Stefan, 71665 Vaihingen / Enz (DE); Romanowski, Thomas, 76135 Karlsruhe (DE)
(74) Vertreter: Patentanwälte Westphal, Mussgnug & Partner

(57) **Zusammenfassung**

Damit ein mehrere Einheiten (B) miteinander vernetzendes, z. B. in ein Kraftfahrzeug eingebautes, ringförmiges Multimedianetzwerk (A) automatisch an Erweiterungen oder Reduzierungen bezüglich der Einheiten (B) angepaßt wird, ist eine als Mensch-Maschine-Schnittstelle (C) dienende Einheit vorgesehen, die aus einer Anwendungsebene (D), einer Schnittstelle (E), einer Zugriffsebene (F), einer Datenebene (G), einer Sende- und Empfangseinheit (H), einem Funktionenkatalog (I) und einem Programmgenerator (J) aufgebaut ist. Von einem Benutzer in die Anwendungsebene (D) eingegebene Befehle werden in der Datenebene (G) in Datentelegramme umgesetzt und mittels der Sende- und Empfangseinheit (H) in das Netzwerk (A) gespeist. Die adressierten Einheiten (B) senden Antworttelegramme zur Mensch-Maschine-Schnittstelle (C) zurück, wo sie in der Anwendungsebene (D) für den Benutzer optisch angezeigt werden. Der Programmgenerator (J) erzeugt die zu den im Funktionenkatalog (I) beschriebenen Funktionen des Netzwerkes (A) gehörenden Programme und sendet sie zur Schnittstelle (E), zur Zugriffsebene (F) oder zur Datenebene (G).

## Beschreibung

Die Erfindung betrifft ein Verfahren zur Steuerung mehrerer in einem ringförmigen Netzwerk miteinander vernetzten Einheiten.

Die Erfindung betrifft weiter ein ringförmiges mehrere Einheiten miteinander vernetzendes Netzwerk.

In Kraftfahrzeuge werden Multimedianetzwerke eingebaut, in welchen mehrere Einheiten, wie z. B. Rundfunkempfänger, Fernsehempfänger, CD-Spieler, DVD-Spieler, Kassettengerät oder Navigationsgerät, über einen ringförmigen optischen Datenbus miteinander vernetzt sind. Bei Anschluß einer zusätzlichen Einheit, beispielsweise eines Autotelefons, an das Netzwerk, werden die zum Betreiben dieser neuen Einheit erforderlichen Programme von Hand in das Multimedianetzwerk eingegeben, was einen zeitraubenden Aufenthalt des Kraftfahrzeugs in einer Werkstatt sowie den Einsatz geschulten Personals erfordert.

Es ist daher Aufgabe der Erfindung, ein ringförmiges Netzwerk, insbesondere ein Multimedianetzwerk für ein Kraftfahrzeug, so zu gestalten, dass Umgestaltungen und Erweiterungen des Netzwerkes wesentlich vereinfacht werden.

Verfahrensmäßig wird diese Aufgabe mit den im Anspruch 1 angegebenen Merkmalen gelöst.

Vorrichtungsmäßig wird diese Aufgabe mit den in Anspruch 2 angegebenen Merkmalen gelöst.

Das erfindungsgemäße Netzwerk vernetzt mehrere Einheiten ringförmig miteinander. Eine dieser Einheiten dient als Mensch-Maschine-Schnittstelle. Diese Einheit ist aus einer Anwendungsebene, einer Schnittstelle, einer Datenebene, einer Sende- und Empfangsebene, einem Funktionenkatalog sowie einem Programmgenerator aufgebaut.

Die Anwendungsebene dient zur Eingabe von Befehlen durch einen Benutzer und zur Anzeige von Informationen, die vom Netzwerk empfangen werden. Die Schnittstelle verbindet die Anwendungsebene mit der Zugriffsebene, in welcher die vom Benutzer in die Anwendungsebene eingegebenen Befehle für die Datenebene umgesetzt werden, in welcher den eingegebenen Befehlen zugeordnete Datentelegramme erzeugt und vom Netzwerk empfangene Informationen zur Anzeige an die Anwendungsebene weitergeleitet werden.

Die Sende- und Empfangsebene speist die von der Datenebene erzeugten Datentelegramme in das Netzwerk ein und empfängt Datentelegramme vom Netzwerk, welche sie weiter zur Datenebene leitet, welche die Datentelegramme weiter zur Anwendungsebene leitet, wo sie dem Benutzer z. B. optisch angezeigt werden.

Der Funktionenkatalog, in welchem die Funktionen des Netzwerkes beschrieben sind, steuert den Programmgenerator, der die Programme für die einzelnen Funktionen erzeugt und der Schnittstelle, der Zugriffsebene und der Datenebene zur Verfügung stellt.

Bei Erweiterung oder Reduzierung der Einheiten des Netzwerkes können der Funktionenkatalog und der Programmgenerator an die Schnittstelle, die Zugriffsebene und die Datenebene angeschlossen werden. Der Funktionenkatalog und der Programmgenerator können aber auch fest in die Mensch-Maschine-Schnittstelle integriert sein. Im Funktionenkatalog können zusätzlich zu den Funktionen des Netzwerkes noch die Anwendungen der Anwendungsebene beschrieben sein.

Beispielsweise handelt es sich bei dem Netzwerk um ein in ein Kraftfahrzeug eingebautes Multimedianetzwerk, dessen Einheiten über einen optischen Bus miteinander ringförmig vernetzt sind.

Eine der im Multimedianetzwerk untereinander vernetzten Einheiten kann z. B. ein Rundfunkempfänger sein. Der Benutzer kann z. B. seinen Lieblingssender oder sein Lieblingsprogramm in die Anwendungsebene eingeben, worauf in der Datenebene ein Datentelegramm erzeugt und von der Sende- und Empfangseinheit zum Rundfunkempfänger gesendet wird. Im Rundfunkempfänger wird dieser Lieblingssender oder dieses Lieblingsprogramm gespeichert. Der Rundfunkempfänger sendet ein Antworttelegramm an die als Mensch-Maschine-Schnittstelle eingesetzte Einheit, wo das Antworttelegramm von der Sende- und Empfangsebene empfangen und weiter zur Datenebene geleitet wird. Die Datenebene sendet das Antworttelegramm zur Anwendungsebene, wo dem Benutzer der Name des ausgewählten Lieblingssenders oder des ausgewählten Lieblingsprogramms angezeigt wird.

Die Erfindung wird anhand der Figuren näher beschrieben und erläutert.

In der Zeichnung zeigen:
- Figur 1: ein Blockschaltbild eines Ausführungsbeispiels der Erfindung,
- Figur 2: ein Blockschaltbild des Funktionenkataloges, des Programmgenerators und der Datenebene des Ausführungsbeispieles,
- Figur 3 und 4: ein die Auswahl eines bevorzugten Senders oder Programms darstellendes Flußdiagramm.

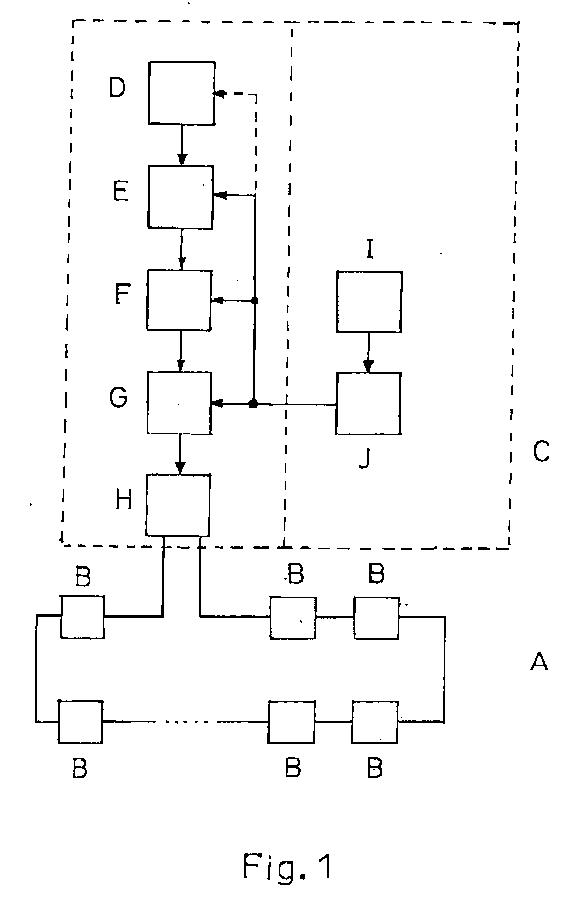

In der Figur 1 ist ein Ausführungsbeispiel eines erfindungsgemäßen ringförmigen Netzwerkes dargestellt, in welchem mehrere Einheiten B und eine als Mensch-Maschine-Schnittstelle dienende Einheit C miteinander vernetzt sind. In der als Mensch-Maschine-Schnittstelle vorgesehenen Einheit C ist eine Anwendungsebene D über eine Schnittstelle E mit einer Zugriffsebene F verbunden, die mit einer Datenebene G verbunden ist. Die Datenebene G ist über eine Sende- und Empfangseinheit H an das Netzwerk A angeschlossen. Ein Funktionenkatalog I ist mit einem Programmgenerator J verbunden, der an die Schnittstelle E, die Zugriffsebene F und die Datenebene G angeschlossen ist. Wie bereits erwähnt lassen sich der Funktionenkatalog I und der Programmgenerator J an die Schnittstelle E, die Zugriffsebene F und die Datenebene G anschließen. Alternativ hierzu können der Funktionenkatalog I und der Programmgenerator J aber auch in die Mensch-Maschine-Schnittstelle C integriert sein. Im Funktionenkatalog I können zusätzlich zu den Funktionen des Netzwerkes A noch die Anwendungen der Anwendungsebene D beschrieben sein.

Ein vom Benutzer in die Anwendungsebene D eingegebener Befehl wird über die Schnittstelle E zur Zugriffsebene F übertragen, wo der Befehl für die Datenebene G umgesetzt wird. In der Datenebene G wird ein dem vom Benutzer eingegebenen Befehl zugeordnetes Datentelegramm erzeugt und zur Sende- und Empfangseinheit H übermittelt, welche das Datentelegramm in das Netzwerk A einspeist, wo es von der angewählten Einheit empfangen und in Form eines Antworttelegramms beantwortet wird, welches die Sende- und Empfangseinheit H empfängt und zur Datenebene G weiterleitet, die es zur Anwendungsebene D überträgt, wo die im Antworttelegramm enthaltenen Informationen dem Benutzer z. B. optisch angezeigt werden.

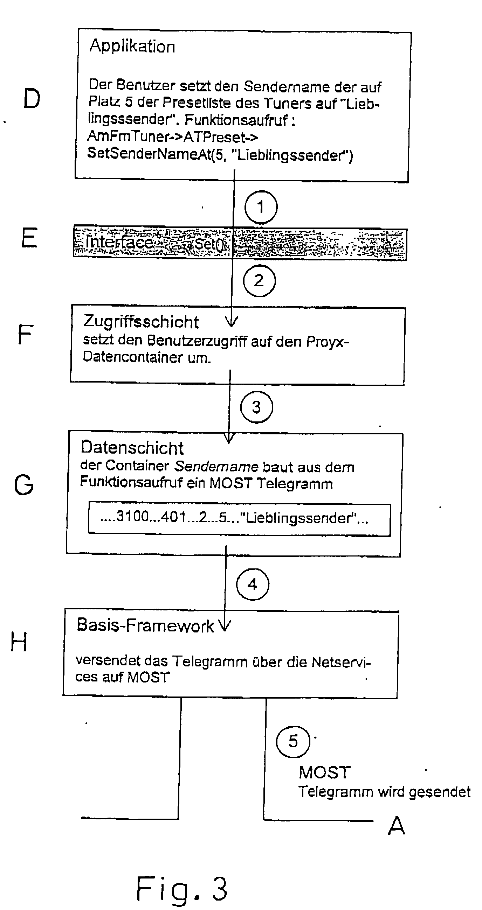

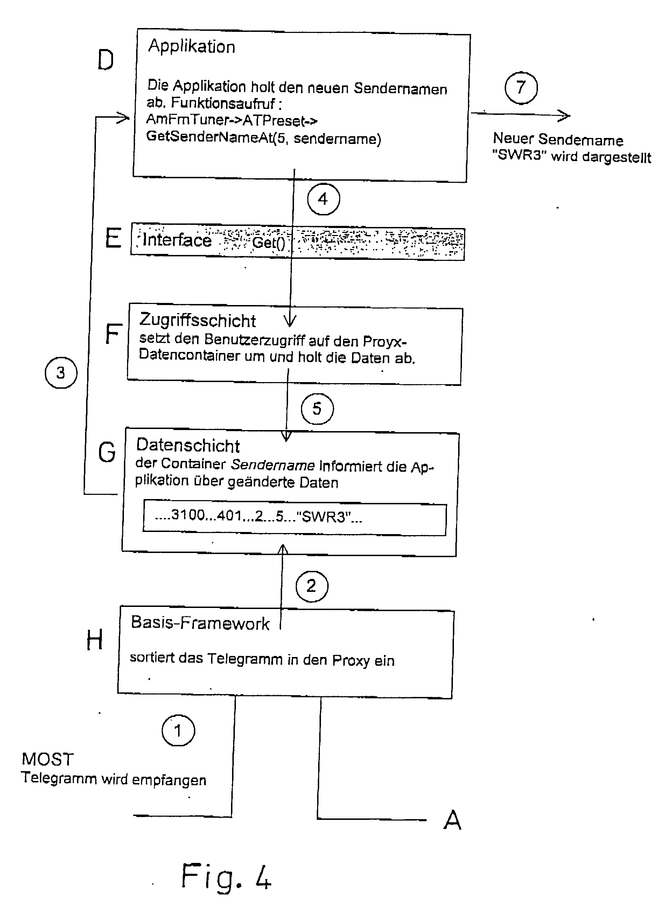

Anhand des in den Figuren 3 und 4 gezeigten Flußdiagrammes wird der Ablauf einer Befehlseingabe in die Anwendungsebene erläutert.

Der Benutzer definiert einen Sender oder ein Programm als bevorzugter Sender oder bevorzugtes Programm in der Anwendungsebene D. Über die Schnittstellebene E wird der vom Benutzer in die Anwendungsebene D eingegebene Befehl sowie der Name des bevorzugten Senders oder Programms zur Zugriffsebene F übermittelt, wo der Befehl und der Name für die Datenebene G umgesetzt werden. In der Datenebene G, die z. B. einen Proxy-Datencontainer darstellt, wird ein Datentelegramm erzeugt, welches über die Sende- und Empfangsebene H in das Netzwerk A eingespeist und zum Rundfunkempfänger gesendet wird. Im Rundfunkempfänger wird der vom Benutzer in die Anwendungsebene D eingegebene Name als bevorzugter Sender oder bevorzugte Programm gespeichert. Der Rundfunkempfänger sendet nun ein Antworttelegramm über das Netzwerk A, das von der Sende- und Empfangsebene H empfangen und weiter zur Datenebene G geleitet wird. Die Datenebene G sendet den Namen des als bevorzugt im Rundfunkempfänger gekennzeichneten Senders oder Programms zur Anwendungsebene D, wo der Name, z. B. SWR3, für den Benutzer optisch angezeigt wird.

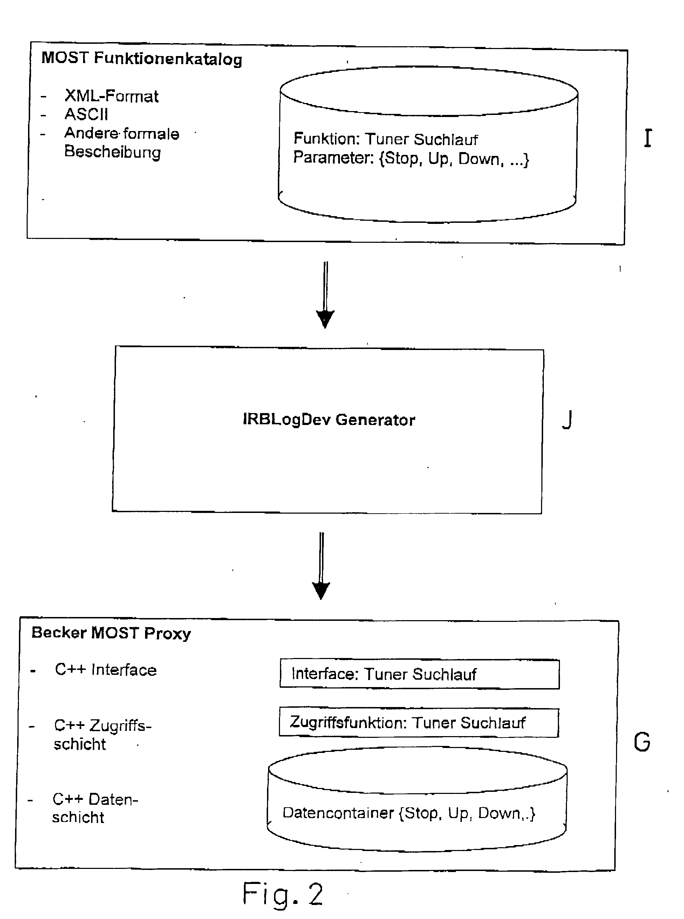

In der Figur 2 sind der Funktionenkatalog I, der Programmgenerator J und die Datenebene G des in Figur 1 gezeigten Ausführungsbeispieles dargestellt.

Die im Funktionenkatalog I gespeicherten Funktionen können beispielsweise im XML- oder im ASCII-Format gespeichert sein. Als Beispiel einer Funktion sei der Suchlauf des Tuners des Rundfunkempfängers genannt.

Die Datenebene G kann z. B. als Proxy-Datencontainer ausgeführt sein.

Durch die erfindungsgemäße Maßnahme, in einem Funktionenkatalog die Funktionen des Netzwerkes zu speichern und in einem Programmgenerator die zu den einzelnen im Funktionenkatalog gespeicherten Funktionen zugehörenden Programme zu erzeugen und in das Netzwerk einzuspeisen, wird das Netzwerk automatisch an Erweiterungen mit zusätzlichen Einheiten oder an eine Reduzierung der Einheiten durch Entfernen von Einheiten angepaßt. Die Eingabe von Befehlen durch Hand in einer Werkstatt ist nicht mehr erforderlich, weil sämtliche Funktionen des Netzwerkes im Funktionenkatalog gespeichert sind. Das erfindungsgemäße Netzwerk erkennt automatisch das Hinzufügen oder Entfernen einer Einheit sowie um welche Einheit es sich dabei handelt.

### Bezugszeichenliste

- A: Netzwerk
- B: Einheit
- C: Mensch-Maschine-Schnittstelle
- D: Anwendungsebene
- E: Schnittstelle
- F: Zugriffsebene
- G: Datenebene
- H: Sende- und Empfangseinheit
- I: Funktionenkatalog
- J: Programmgenerator

## Patentansprüche

1. Verfahren zur Steuerung mehrerer in einem ringförmigen Netzwerk (A) miteinander vernetzten Einheiten (B),mit einer als Mensch-Maschine-Schnittstelle (C) dienenden Einheit,mit einer Anwendungsebene (D) zur Eingabe von Befehlen durch einen Benutzer und zur Anzeige von vom Netzwerk (A) empfangenen Informationen, mit einer Schnittstelle (E), welche die Anwendungsebene (D) mit einer Zugriffsebene (F) verbindet, in welcher die vom Benutzer in die Anwendungsebene (D) eingegebenen Befehle umgesetzt und zu einer Datenebene (G) gesendet werden, in welcher Datentelegramme erzeugt werden und welche vom Netzwerk (A) empfangene Informationen zur Anzeige an die Anwendungsebene (D) weiterleitet, mit einer Sende- und Empfangsebene (H), welche die von der Datenebene (G) erzeugten Datentelegramme in das Netzwerk (A) einspeist und vom Netzwerk (A) empfangene Datentelegramme zur Datenebene (G) weiterleitet,mit einem Funktionenkatalog (I), in welchem die Funktionen des Netzwerkes (A) beschrieben werden und mit einem Programmgenerator (J), welcher die Programme für die einzelnen Funktionen erzeugt und zur Schnittstelle (E), zur Zugriffsebene (F) oder zur Datenebene (G) sendet.

2. Ringförmiges mehrere Einheiten (B) miteinander vernetzendes Netzwerk (A),mit einer als Mensch-Maschine-Schnittstelle (C) vorgesehenen Einheit, mit einer Anwendungsebene (D) zur Eingabe von Befehlen durch einen Benutzer und zur Anzeige von vom Netzwerk (A) empfangenen Informationen, mit einer Schnittstelle (E), mittels der die Anwendungsebene (D) mit einer Zugriffsebene (F) verbunden ist, in welcher die vom Benutzer in die Anwendungsebene (D) eingegebenen Befehle umsetzbar und zu einer Datenebene (G) übertragbar sind, in welcher Datentelegramme erzeugbar und mittels welcher vom Netzwerk (A) empfangene Informationen zur Anzeige an die Anwendungsebene (A) weiterleitbar sind, mit einer Sendeund Empfangsebene (A), mittels welcher die von der Datenebene (G) erzeugten Datentelegramme in das Netzwerk (A) einspeisbar und vom Netzwerk (A) empfangene Datentelegramme zur Datenebene (G) weiterleitbar sind, mit einem Funktionenkatalog (I), in welchem die Funktionen des Netzwerkes (A) beschrieben sind und mit einem Programmgenerator (J) zur Erzeugung der Programme für die einzelnen Funktionen für die Schnittstelle (E), die Zugriffsebene (F) oder die Datenebene (G).

3. Verfahren nach Anspruch 1 oder Netzwerk nach Anspruch 2,
**dadurch gekennzeichnet, dass** der Funktionenkatalog (I) und der Programmgenerator (J) bei Erweiterung oder Reduzierung der Einheiten (B) des Netzwerkes (A) an die Schnittstelle (E), die Zugriffsebene (F) oder die Datenebene (G) angeschlossen werden bzw. sind.

4. Verfahren nach Anspruch 1 oder Netzwerk nach Anspruch 2,
**dadurch gekennzeichnet, dass** der Funktionenkatalog (I) und der Programmgenerator (J) in die Mensch-Maschine-Schnittstelle (C) integriert werden bzw. sind.

5. Verfahren oder Netzwerk nach Anspruch 4,
**dadurch gekennzeichnet, dass** im Funktionenkatalog (I) die Anwendungen der Anwendungsebene (D) beschrieben werden bzw. sind.

6. Verfahren nach einem der Ansprüche 1 bis 5,
**dadurch gekennzeichnet, dass** für das Netzwerk ein Multimedianetzwerk vorgesehen wird bzw. ist.

7. Verfahren oder Netzwerk nach Anspruch 6,
**dadurch gekennzeichnet, dass** das Multimedianetzwerk (A) in ein Kraftfahrzeug eingebaut wird bzw. ist.

8. Verfahren oder Netzwerk nach einem der Ansprüche 1 bis 7,
**dadurch gekennzeichnet, dass** die Einheiten (B, C) des Netzwerkes (A) über einen optischen Bus miteinander vernetzt werden bzw. vernetzt sind.

9. Verfahren oder Netzwerk nach Anspruch 7 oder 8,
**dadurch gekennzeichnet, dass** im Netzwerk (A) mindestens ein Rundfunkempfänger vorgesehen wird bzw. ist.

10. Verfahren oder Netzwerk nach einem der Ansprüche 1 bis 9,
**dadurch gekennzeichnet, dass** die im Funktionenkatalog (I) gespeicherten Funktionen im XML-Format, ASCII-Format oder in einem anderen Format beschrieben werden bzw. sind.

11. Verfahren oder Netzwerk nach Anspruch 9 oder 10,
**dadurch gekennzeichnet, dass** in die Anwendungsebene (D) vom Benutzer ein Befehl zum Speichern des Namens eines auswählbaren Senders oder Programms eingegeben wird bzw. eingebbar ist, dass der eingegebene Befehl über die Schnittstelle (E) zur Zugriffsebene (F) gesendet wird bzw. übertragbar ist, wo der Befehl für die Datenebene (G) umgesetzt wird bzw. umsetzbar ist, dass in der Datenebene (G) ein dem Befehl zugeordnetes Datentelegramm erzeugt wird bzw. erzeugbar ist, das von der Sende- und Empfangseinheit (H) in das Netzwerk (A) eingespeist wird bzw. einspeisbar ist, dass das Datentelegramm vom Rundfunkempfänger empfangen wird bzw. empfangbar ist, dass der Rundfunkempfänger dem Befehl entsprechend den Namen des ausgewählten Senders oder Programms als Antworttelegramm in das Netzwerk (A) einspeist bzw. dass vom Rundfunkempfänger dem Befehl entsprechend der Name des ausgewählten Senders oder Programms als Antworttelegramm in das Netzwerk (A) einspeisbar ist, dass die Sende- und Empfangseinheit (H) das Antworttelegramm empfängt und an die Datenebene (G) weiterleitet, die es zur Anwendungsebene (D) weiterleitet, wo der Name des ausgewählten Senders oder Programms angezeigt wird, bzw. dass das Antworttelegramm von der Sende- und Empfangseinheit (H) empfangbar uns zur Datenebene (G) weiterleitbar ist, von wo aus es zur Anwendungsebene (D) weiterleitbar ist, wo der Name des ausgewählten Senders oder Programms anzeigbar ist.

12. Verfahren oder Netzwerk nach Anspruch 9, 10 oder 11,
**dadurch gekennzeichnet, dass** der Suchlauf des Tuners des Rundfunkempfängers als Funktion im Funktionenkatalog (I) beschrieben wird bzw. ist.
